# EUROPEAN PATENT APPLICATION

(11) **EP 4 645 773 A1**
(43) Date of publication of application: **05.11.2025**
(21) Application number: 22969627.3
(22) Date of filing: 28.12.2022
(51) Int. Cl.: H04L 27/00

(54) **INFORMATION PROCESSING METHOD AND APPARATUS, AND COMMUNICATION DEVICE AND STORAGE MEDIUM**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Stöckeler, Ferdinand
(86) International application number: PCT/CN2022/143070
(87) International publication number: WO 2024/138476

(57) **Abstract**

Provided in the embodiments of the present disclosure are an information processing method and apparatus, and a communication device and a storage medium. The information processing method, which is executed by a UE, may comprise: in response to a trigger mobility operation, applying first configuration information and/or second configuration information of a target cell or a target cell group.

## Description

### FIELD

The present invention relates to, but is not limited to, the field of wireless communication technology, and in particular to an information processing method and apparatus, a communication device, and a storage medium.

### BACKGROUND

In dual connectivity, a user equipment (UE) may access two cells or two cell groups. These cells may be divided into a primary cell (Pcell) and a secondary cell (Scell). The cell groups may be divided into a master cell group (MCG) and a secondary cell group (SCG). In the MCG, there may be many cells, one of which is used to initiate initial access, and this cell is called PCell. As the name suggests, PCell is the most important cell in the MCG. The PCell in the MCG and the SCell in the MCG are combined together through carrier aggregation (CA).

### SUMMARY

Embodiments of the present invention provide an information processing method and apparatus, a communication device, and a storage medium.

In a first aspect, embodiments of the present invention provide an information processing method, which is performed by a user equipment UE, and the method includes: in response to triggering a mobility operation, applying first configuration information and/or second configuration information of a target cell or a target cell group.

In a second aspect, embodiments of the present invention provide an information processing apparatus, and the apparatus includes: an application module, configured to apply first configuration information and/or second configuration information of a target cell or a target cell group in response to triggering a mobility operation.

In a third aspect, embodiments of the present invention provide a communication device including a processor, a transceiver, a memory, and programs stored in the memory and executable by the processor, and the processor is configured to perform the information processing method according to any technical solution of the first aspect described above when executing the programs.

In a fourth aspect, embodiments of the present invention provide a computer storage medium, having stored therein executable programs that, when executed by a processor, cause the method according to any technical solution of the first aspect described above to be performed.

In the technical solution provided by embodiments of the present invention, when the mobility operation of the UE is triggered, the first configuration information and/or the second configuration information of the target cell or the target cell group pointed to by the mobility operation will be applied, thus to reduce the error problem caused by not timely applying the first configuration information and/or the second configuration information of the target cell or the target cell group but continuing to use the configuration information of the current cell or the current cell group, thereby reducing access failure of the target cell or the target cell group and/or the problem of poor communication quality in the target cell or the target cell group, caused by incorrect use of configuration information, thereby improving the wireless communication quality of the UE.

It should be understood that the foregoing general description and the following detailed description are illustrative and explanatory and are not restrictive of embodiments of the present invention.

### BRIEF DESCRIPTION OF THE DRAWINGS

The accompanying drawings herein are incorporated in and constitute a part of the description, illustrate embodiments consistent with the present invention, and serve to explain the principles of embodiments of the present invention together with the description.
FIG. 1 is a schematic structural diagram of a wireless communication system according to an illustrative embodiment;
FIG. 2A is a schematic diagram of a dual-connectivity network according to an illustrative embodiment;
FIG. 2B is a schematic diagram of a dual-connectivity network according to an illustrative embodiment;
FIG. 2C is a schematic diagram of a dual-connectivity network according to an illustrative embodiment;
FIG. 3A is a schematic flow chart of an information processing method according to an illustrative embodiment;
FIG. 3B is a schematic flow chart of an information processing method according to an illustrative embodiment;
FIG. 3C is a schematic flow chart of an information processing method according to an illustrative embodiment;
FIG. 3D is a schematic flow chart of an information processing method according to an illustrative embodiment;
FIG. 3E is a schematic flow chart of an information processing method according to an illustrative embodiment;
FIG. 3F is a schematic flow chart of an information processing method according to an illustrative embodiment;
FIG. 4 is a schematic block diagram of an information processing apparatus according to an illustrative embodiment; and
FIG. 5 is a schematic structural diagram of a UE according to an illustrative embodiment.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with embodiments of the present invention. Instead, they are merely examples of apparatuses and methods consistent with some aspects of the present invention.

Terms used in embodiments of the present invention are for the purpose of describing specific embodiments, but should not be construed to limit embodiments of the present invention. As used in the present invention, "a/an", "said" and "the" in singular forms are intended to include plural forms, unless clearly indicated in the context otherwise. It should also be understood that the term "and/or" used herein represents and contains any or all possible combinations of one or more associated items listed.

It should be understood that, although terms such as "first," "second" and "third" may be used in embodiments of the present invention for describing various information, these information should not be limited by these terms. These terms are used for distinguishing information of the same type from each other. For example, first information may also be referred to as second information, and similarly, the second information may also be referred to as the first information, without departing from the scope of embodiments of the present invention. As used herein, the term "if" may be construed to mean "when", "upon" or "in response to determining" depending on the context.

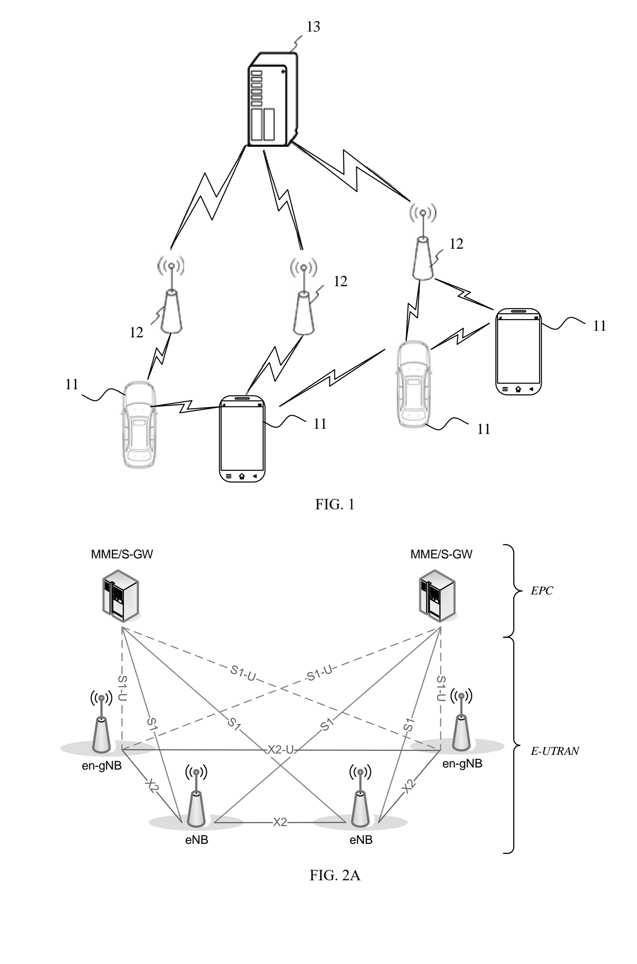

Referring to FIG. 1, FIG. 1 is a schematic structural diagram showing a wireless communication system according to illustrative embodiments. As shown in FIG. 1, the wireless communication system is a communication system based on a cellular mobile communication technology, and may include several UEs 11 and several network devices, and the network devices may include access devices 12 and core network devices. The core network devices are not shown in FIG. 1.

The UE 11 may refer to a device that provides voice and/or data connectivity to a user. The UE 11 may communicate with one or more core networks via a radio access network (RAN). The UE 11 may be an Internet of Things UE, such as a sensor device, a mobile phone (also called cellular phone) or a computer with an Internet of Things UE. For example, the UE 11 may be a fixed, portable, pocket-sized, handheld, built-in computer, or vehicle-mounted apparatus, such as a station (STA), a subscriber unit, a subscriber station, a mobile station, a mobile, a remote station, an access point, a remote terminal, an access UE (as called access terminal), a user terminal, a user agent, a user device, or a user equipment. Alternatively, the UE 11 may be a device of an unmanned aerial vehicle. Alternatively, the UE 11 may be a vehicle-mounted device, for example, an electronic control unit with a wireless communication function, or a wireless communication device externally connected with an electronic control unit. Alternatively, the UE 11 may be a roadside device, such as a street lamp, a signal lamp, or other roadside devices with a wireless communication function.

The access device 12 may be a network device in the wireless communication system. The wireless communication system may be a 4th generation mobile communication (4G) system, also referred to as a long term evolution (LTE) system. Alternatively, the wireless communication system may be a 5G system, also referred to as a new radio (NR) system or a 5G NR system. Alternatively, the wireless communication system may be a next generation system of the 5G system. The access network in the 5G system may be referred to as a new generation-radio access network (NG-RAN). Alternatively, the wireless communication system may be an MTC system.

The access device 12 may be an evolved access device (eNB) used in the 4G system. Alternatively, the access device 12 may be an access device (gNB) with a centralized distributed architecture used in the 5G system. When the access device 12 adopts the centralized distributed architecture, it usually includes a central unit (CU) and at least two distributed units (DUs). A protocol stack of a packet data convergence protocol (PDCP) layer, a radio link control (RLC) layer and a media access control (MAC) layer is provided in the central unit. A protocol stack of a physical (PHY) layer is provided in the distributed unit. The specific implementation of the access device 12 is not limited in embodiments of the present invention.

A wireless connection may be established between the access device 12 and the UE 11 through a wireless air interface. In different embodiments, the wireless air interface is a wireless air interface based on the 4th generation mobile communication network technology (4G) standard, a wireless air interface based on the 5th generation mobile communication network technology (5G) standard, such as a new radio, or a wireless air interface based on the next generation mobile communication network technology standard of the 5G.

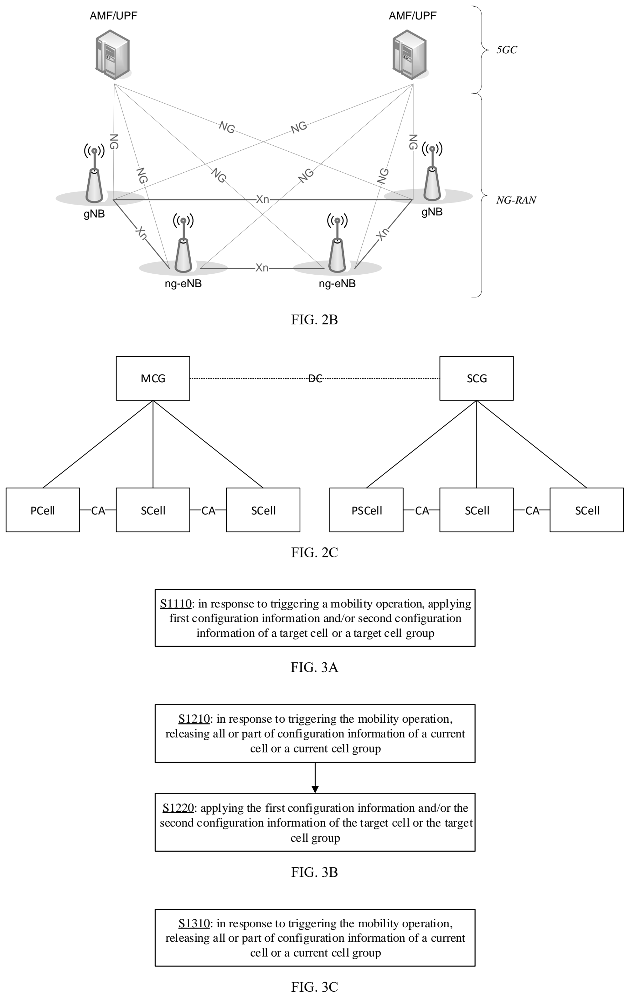

Several dual connectivity technologies are introduced below in conjunction with FIG. 2A and FIG. 2B.

### 1) Multi-Radio Dual Connectivity (MR-DC):

MR-DC is a generalized Intra-Evolved UMTS Terrestrial Radio Access (E-UTRA) dual connectivity, where UMTS is the abbreviation of Universal Mobile Telecommunication System. The UE may use the radio resources provided by two different schedulers, which are located on two different New Generation Radio Access Network (NG-RAN) nodes, and connected through non-ideal backhaul, one of the two nodes provides New Radio access and the other one provides E-UTRA or NR access. One of the two nodes acts as a master node (MN), and the other one acts as a secondary node (SN). The MN and SN are connected through a network interface, and at least the MN is connected to the core network.

### 2) MR-DC based on Evolved Packet Core (EPC):

As shown in FIG. 2A, E-UTRAN supports MR-DC through E-UTRA-NR DC (EN-DC), where the UE is connected to an eNB acting as an MN and an en-gNB acting as an SN. The eNB is connected to the EPC through an S1 interface and to the en-gNB through an X2 interface. The en-gNB may also be connected to the EPC through an S1-U interface and to other en-gNBs through an X2-U interface. As shown in FIG. 2A, the core network device of the EPC may include: a mobility management entity (MME) and/or a service-gateway (S-GW).

### 3) MR-DC with the 5th generation core (5GC).

A) Dual Connectivity of E-UTRA-NR and NGEN-DC (also called E-UTRA-NR Dual Connectivity NGEN-DC).

NG-RAN supports NG-RAN E-UTRA-NR dual connectivity (NGEN-DC), where the UE is connected to an ng-eNB acting as an MN and a gNB acting as an SN. The ng-eNB is connected to 5GC, and the gNB is connected to the ng-eNB via an Xn interface.

### B) NR-E-UTRA Dual Connectivity (NE-DC)

NG-RAN supports NR-E-UTRA DC (NE-DC), where the UE is connected to a gNB acting as an MN and an ng-eNB acting as an SN. The gNB is connected to the 5GC, and the NG-eNB is connected to the gNB via an Xn interface.

### C) NR-NR Dual Connectivity

As shown in FIG. 2B, NG-RAN supports NR-NR DC (NR-DC), in which the UE is connected to a gNB acting as an MN and another gNB acting as an SN. The primary gNB is connected to the 5GC via an NG interface, the two gNBs are connected via an Xn interface, and the secondary gNB may also be connected to the 5GC via an NG-U interface. In addition, NR-DC may also be used for UE to access a single gNB, which acts as both the MN and the SN, and is configured with both MCG and SCG. The core network device of 5GC may include: Access Management Function (AMF) and/or User Plane Function (UPF). The gNBs are connected to each other via an Xn interface.

The following provides relevant explanations or descriptions of the terms used in one or more embodiments of the present application:
Mobility operations may include: various operations related to serving cell update (or change) of a UE, for example, operations of primary cell change of the UE, operations of master cell group change of the UE, operations of secondary cell change of the UE and/or operations of secondary cell group change of the UE.
A primary cell (Pcell) may be: a cell where the UE initiates initial access.
A Master Cell Group (MCG) may be: a cell group including a primary cell. It should be noted that the master cell group may also include one or more secondary cells.

A secondary cell (Scell) may be a cell other than the Pcell. A secondary cell may be divided into a primary secondary cell (PScell), which is a relatively important cell among secondary cells.

A secondary cell group (SCG) includes: one or more secondary cells.

Usually, many control signalings of the UE are only sent on the primary cell or the primary secondary cell.

A special (Primary) cell (sPcell) includes: a primary cell and a primary secondary cell.

As shown in FIG. 2C, when the UE supports dual connectivity, the serving cell of the UE may include a primary cell and a secondary cell; the serving cell group of the UE may include: a master cell group and a secondary cell group.

The UE supports both MCG and SCG through dual connectivity. The UE supports both PCell and SCell of MCG through carrier aggregation (CA); similarly, the UE supports both PSCell and SCell of SCG through CA.

In an embodiment, first configuration information may include RRC reconfiguration information. It should be noted that the first configuration information may also be configuration information of other signaling, for example, configuration information of a MAC CE layer.

For example, the first configuration information may include: access configuration information, measurement configuration information and/or bearer configuration information, etc. The access configuration information may include: initial access configuration information and/or random access configuration information. In short, the access configuration information may be used for the UE to access the cell associated with the first configuration information.

Also for example, the RRC reconfiguration information in the first configuration information includes: access configuration information, measurement configuration information and/or bearer configuration information, etc. The access configuration information may include one or more of: initial access configuration information or random access configuration information.

The measurement configuration information may include: configuration information for the UE to measure a beam of a cell and/or a reference signal of the cell. For example, through beam scanning and beam quality measurement, the UE may select a service beam for uplink transmission and/or downlink transmission. The reference signal here includes but is not limited to: synchronization signal and PBCH block (SSB), channel state information-reference signal (CSI-RS), etc. PBCH is the abbreviation of Physical Broadcast Channel.

The measurement configuration information may include one or more of: configuration information of a measurement object, configuration information of a measurement identifier, and/or configuration information of a reporting configuration.

The bearer configuration information may include: signaling radio bearer (SRB) configuration information, and/or data radio bearer (DRB) configuration information. The bearer configuration information may be used by the UE to determine the SRB for transmitting control signaling according to the SRB configuration information and/or determine the DRB for transmitting data according to the DRB configuration information after the UE accesses a corresponding cell.

In some embodiments, the first configuration information may include candidate configuration information included in mobility configuration information associated with a target cell or a target cell group in mobility configuration information sent by the network device to the UE.

For example, the network device may send one or more mobility configuration information to the UE, each mobility configuration information is associated with one cell or one cell group, and each mobility configuration information may include candidate configuration information corresponding to the cell or the cell group.

For example, the candidate configuration information may include at least RRC reconfiguration information and/or configuration information of other signaling. The candidate configuration information or the RRC reconfiguration information may include, but is not limited to: layer 1 and/or layer 2 triggered cell group/cell activation (also named as L1/L2-triggered mobility, LTM) configuration information and/or cell selective activation configuration information. The layer 1 and/or layer 2 triggered cell group/cell activation (L1/L2-triggered mobility, LTM) configuration information may be configuration information activated by an L1 and/or L2 layer indication. The cell selective activation configuration information may be configuration information activated by the UE when an activation condition is met.

In some embodiments, second configuration information may be configuration information for reference by the first configuration information.

In an embodiment, the second configuration information may include RRC reconfiguration information. It should be noted that the second configuration information may also be configuration information of other signaling, for example, configuration information of the MAC CE layer.

For example, the second configuration information may include: access configuration information, measurement configuration information and/or bearer configuration information, etc. The access configuration information may include: initial access configuration information and/or random access configuration information. In short, the access configuration information may be used for the UE to access a cell associated with the second configuration information.

Also for example, the RRC reconfiguration information in the second configuration information includes: access configuration information, measurement configuration information and/or bearer configuration information, etc. The access configuration information may include one or more of: initial access configuration information or random access configuration information.

For example, the first configuration information may be addition configuration information to the second configuration information. For example, after the first configuration information and the second configuration information are combined, full configuration information provided by the network device for the UE may be obtained.

Also for example, the first configuration information indicates: an increment of the full configuration information of the UE relative to the second configuration information.

For example, the second configuration information may be universal reference configuration information, that is, the first configuration information corresponding to all target cells or target cell groups is addition configuration information to the second configuration information.

For example, the second configuration information may be reference configuration information associated with the target cell or the target cell group, that is, different first configuration information corresponds to different second configuration information.

In some embodiments, the first configuration information may be addition configuration information, and may be an increment of reference configuration information determined according to the second configuration information or an indication from other network, or specified by a protocol or determined by the UE.

In some embodiments, the first configuration information may be full configuration information, which is complete configuration information of the target cell or target cell group.

The target cell is a serving cell to be accessed by the UE; and the target cell may be a primary cell and/or a secondary cell.

The target cell group is a serving cell group to be accessed by the UE, and the target cell group may be a master cell group and/or a secondary cell group of the UE.

For example, the cell group may be one or more of: a master cell group (MCG) or a secondary cell group (SCG). The MCG includes one or more of: a primary cell (PCell) or a secondary cell (SCell). The SCG includes one or more of a primary secondary cell (PSCell) or a secondary cell (SCell).

As shown in FIG. 3A, embodiments of the present invention provide an information processing method, performed by a user equipment UE, and the method includes:
S1110, in response to triggering a mobility operation, applying first configuration information and/or second configuration information of a target cell or a target cell group.

The UE may be any terminal as shown in FIG. 1. The terminal may include a mobile terminal and/or a fixed terminal.

For example, the UE may include: a mobile phone, a tablet computer, a wearable device, a vehicle-mounted device, an aircraft device, a smart office device and/or a smart home device, etc.

Here, "in response to triggering a mobility operation" may be understood as: the mobility operation of the UE is triggered, that is, the UE needs to perform the mobility operation under this trigger. The mobility operation may cause the serving cell of the UE to be switched.

Triggering the mobility operation may include that:
a triggering condition included in mobility configuration information being met; and/or
a network indication for triggering the mobility operation being received from a network device.

For example, a triggering condition of a cell selective configuration included in the mobility configuration is met, and/or a handover condition of cell conditional handover in the mobility configuration information is met. In this case, the UE may automatically determine whether the mobility operation is triggered.

In some other embodiments, the network device may instruct the UE to perform the mobility operation through a Layer 1 (L1) signaling, a Layer 2 (L2) signaling and/or a Layer 3 (L3) signaling according to a measurement report of the UE and/or based on conditions such as load balancing.

Layer 1 here may be a physical layer, and the signaling of the physical layer may include at least downlink control information (DCI), and the signaling of Layer 2 may include at least a media access control (MAC) control element (CE). Layer 3 signaling may include radio resource control (RRC) signaling.

In a case where the UE triggers the mobility operation, the target cell or the target cell group is a serving cell and/or a serving cell group accessed by the UE after the mobility operation.

For example, the mobility configuration information corresponding to the mobility operation may be pre-configured for the UE by the network side, each mobility configuration information corresponds to one cell or cell group, the mobility configuration information may include a trigger condition, and the target cell or the target cell group is one or more of cells or cell groups corresponding to the trigger condition met by the UE. Alternatively, the network indicates activation of a certain mobility configuration, and the target cell or the target cell group is a cell or cell group corresponding to the mobility configuration to be activated according to the indication from the network.

In this case, since the mobility operation is triggered, the first configuration information and/or the second configuration information of the serving cell or the serving cell group accessed by the UE after the mobility operation is applied. Applying the first configuration information and/or the second configuration information here may be understood as: using the first configuration information and/or the second configuration information.

As shown above, the first configuration information may be addition configuration information, and the second configuration information may be reference configuration information. In this way, the first configuration information and the second configuration information are combined to obtain the full configuration information of the target cell and/or the target cell group. However, in some cases, the UE may only need to use part of the full configuration information. The addition configuration information may be candidate configuration information of the target cell or the target cell group.

In some implementations, the first configuration information may be full configuration information, that is, full configuration information of the target cell and/or target cell group. Therefore, the UE may only apply the first configuration information after triggering the mobility operation.

In some implementations, even if the first configuration information is not the complete configuration information, the UE may only apply the first configuration information after triggering mobility, for example, the first configuration information is addition configuration information to current configuration information, or the network device only needs newly added parameters or the like in the first configuration information updated by the UE.

In this case, the phenomenon that the UE, after performing the mobility operation, continues using the configuration information of the current cell or the current cell group stored before the mobility operation, resulting in incorrect use of the configuration information, may be reduced. By applying the first configuration information and/or the second configuration information of the target cell or the target cell group, communication failure and/or poor communication quality caused by the error of continuing using the configuration information of the cell or the cell group before the mobility operation is reduced.

As shown in FIG. 3B, embodiments of the present invention provide an information processing method, performed by a user equipment UE, and the method includes:
S1210, in response to triggering a mobility operation, releasing all or part of configuration information of a current cell or a current cell group; and
S1220, applying first configuration information and/or second configuration information of the target cell or the target cell group.

The embodiment shown in FIG. 3B here may be implemented alone or in combination with the embodiment corresponding to FIG. 3A. For example, the descriptions on the first configuration information, the second configuration information, the current cell, the current cell group, and part or all of the configuration information of the current cell and/or the current cell group in the embodiment corresponding to FIG. 3A may be applied to the embodiment of FIG. 3B.

As shown in FIG. 3C, embodiments of the present invention provide an information processing method, performed by a user equipment UE, and the method includes:
S1310, in response to triggering a mobility operation, releasing all or part of configuration information of a current cell or a current cell group.

The embodiment shown in FIG. 3C here may be implemented alone or in combination with the embodiment corresponding to FIG. 3A. For example, descriptions on the current cell, the current cell group, and part or all of the configuration information of the current cell and/or the current cell group in the embodiment corresponding to FIG. 3A are also applicable here.

In embodiments corresponding to FIG. 3A and FIG. 3B, the current cell is the current serving cell of the UE, and the current cell group may be the current serving cell group of the UE. The current cell may be a primary cell and/or a primary secondary cell. The current cell group may be a master cell group and/or a secondary cell group of the UE.

Since the current cell or current cell group is the cell or cell group currently accessed by the UE and is the cell or cell group currently providing services to the UE, the UE certainly stores the configuration information of the current cell and/or current cell group.

In embodiments of the present invention, releasing all or part of the configuration information of the current cell or the current cell group may be understood as: deleting all or part of the configuration information of the current cell or the current cell group stored by the UE; or clearing all or part of the configuration information of the current cell or the current cell group stored by the UE.

In embodiments of the present invention, all or part of the configuration information of the current cell or the current cell group released here may be: part or all of the configuration information that may affect the use of the configuration information of the target cell or the target cell group.

For example, if the configuration information of the target cell or the target cell group adopts an addition configuration manner, the configuration information of the target cell or the target cell group may include the first configuration information and/or the second configuration information. Further, the second configuration information corresponding to the addition configuration manner is the configuration information of the primary cell. In this case, if the mobility operation is: an operation of switching or updating the primary cell and the secondary cell of the UE, and the configuration information of the current primary cell is not released, the UE still stores or continues using the configuration information of the current primary cell (i.e., the source primary cell), then the target secondary cell after the mobility operation may incorrectly refer to the configuration information of the source primary cell, resulting in an incorrect application of the configuration information of the target secondary cell.

As another example, if the target cell is a primary cell accessed by the UE after performing the mobility operation, and the configuration information of the source primary cell is not released, the UE may mistakenly regard and use the configuration information of the source primary cell as the configuration information of the target primary cell.

In summary, in embodiments of the present invention, if the target cell or target cell group does not adopt full configuration, during the process of the UE performing the mobility operation or after performing the mobility operation, and before applying the configuration information of the target cell or the target cell group, part or all of the configuration information of the current cell and/or the current cell group needs to be released, so as to reduce the incorrect application of the configuration information of the target cell and/or the target cell group.

For example, in response to triggering the mobility operation, releasing all or part of the configuration information of the current cell or cell group includes:
in response to triggering the mobility operation of a primary cell or a master cell group, releasing all or part of the configuration of a current primary cell or master cell group, or
in response to triggering the mobility operation of a primary secondary cell or a secondary cell group, releasing all or part of the configuration of a current primary secondary cell or secondary cell group.

Triggering the mobility operation of the primary cell or the master cell group means that the primary cell or the master cell group of the UE will be switched from the current primary cell or master cell group to the target primary cell or target master cell group. In order to reduce the interference of the configuration information of the current primary cell or the current master cell group on the application of the configuration information of the target cell or the target cell group, part and/or all of the configuration information of the current primary cell or the current master cell group will be released. For example, addition configuration information and/or reference configuration information of the current cell or the current cell group will be released.

Triggering the mobility operation of the primary secondary cell or the secondary cell group means that the primary secondary cell or the secondary cell group of the UE will be switched to the target primary secondary cell or secondary cell group. In order to reduce the interference of the configuration information of the current primary secondary cell or the current secondary cell group on the application of the configuration information of the target cell or the target cell group, part and/or all of the configuration information of the current primary secondary cell or the current secondary cell group will be released. For example, addition configuration information and/or reference configuration information of the current primary secondary cell or the current secondary cell group is released.

For example, the first configuration information of the target cell or target cell group at least includes: RRC reconfiguration information of the target cell or target cell group.

The RRC reconfiguration information may be configuration information provided using RRC signaling. For example, the RRC reconfiguration information may be RRCReconfiguration.

For example, the first configuration information or RRC reconfiguration information may include: measurement configuration information, access configuration information and/or bearer configuration information, etc.

In some embodiments, releasing all or part of the configuration information of the current cell or the current cell group includes: at least releasing such radio resource control (RRC) configuration information in the configuration information of the current cell or the current cell group that is stored by the UE and has an update manner of addition, modification and/or release.

For example, among the configuration information of the current cell or the current cell group stored by the UE, those configuration information that will affect the application of the configuration information of the target cell or the target cell group may be RRC configuration information that may be modified by means of addition, modification and/or release list (Add/Mod/Release list). The RRC configuration information may be any configuration information sent by RRC signaling.

For example, for a configuration information list stored by the UE, subsequent RRC signaling may modify RRC configuration parameters stored in the configuration information list by at least one of the three manners of addition, modification and/or release list (Add/Mod/Release). The configuration information list may include addition/modification list (Add/Mod List). The UE stores the current configuration information, and candidate RRC signaling adds and/or modifies the configuration information to the configuration information list stored by the UE by means of Add/Mod List, and deletes the configuration information in the list for storing configuration information by means of the Release List. The configuration information of the target cell or the target cell group may contain a new Add/Mod/Release list corresponding to new configuration information, and there is generally only one corresponding list for storing configuration information in the UE; if the RRC configuration information of the current cell or the current cell group in the list is not deleted, then when applying the configuration information of the target cell or the target cell group, the RRC configuration information in the list will be used incorrectly, and on the basis of this list, update is performed using the Add/Mod/Release list in the configuration information of the target cell or the target cell group, thereby obtaining the wrong configuration information, which means that the configuration information of the current cell or the current cell group is used incorrectly.

For example, if all of the configuration information of the target cell or target cell group is configured in the manner oh Add/Mod/Release list, all of configuration information of the current cell or current cell group needs to be deleted. If part of the configuration information of the target cell or target cell group is configured in the manner of Add/Mod/Release list, just the part of the configuration information that is configured in the manner of Add/Mod/Release list needs to be deleted, of course, all of the configuration information of the current cell or current cell group may be deleted, alternatively.

In some embodiments, releasing all or part of the configuration information of the current cell or the current cell group includes at least one of:
releasing radio resource control (RRC) reconfiguration information of the current cell or the current cell group;
the current cell or the current cell group being a secondary cell or a secondary cell group configured with signaling radio bearer SRB3, and releasing configuration information of the SRB3 of the current cell or the current cell group;
the current cell or the current cell group being a primary secondary cell or a secondary cell group, and releasing timer configuration information related to the current cell or the current cell group; or
the current cell or the current cell group being a primary secondary cell or a secondary cell group, and resetting a media access control MAC entity of the current cell or the current cell group.

The current cell that needs to be updated may be a primary cell and/or a secondary cell; the current cell group may be: a current master cell group and/or a current secondary cell group, and the RRC reconfiguration information may all be released.

SRB1 and SRB2 are SRBs for the primary cell, and SRB3 is a dedicated SRB for the primary secondary cell or the secondary cell group. If the current cell or the current cell group is the primary secondary cell or the secondary cell group, and is configured with SRB3, the configuration information of SRB3 (also referred to as SRB3 configuration information) will be released, so as to facilitate the setting and application of the configuration information of SRB3 of the target cell or the target cell group.

The timer of the secondary cell or the secondary cell group may include at least one of:
T346a,
T346b,
T346c,
T346d,
T346e,
T346j,
T346k,
T310 of the primary secondary cell, where if an invalid link failure occurs in the primary secondary cell when T310 runs, information on the invalid link failure is reported to the network device; for example, if the number of consecutive desynchronizations of the primary secondary cell exceeds the maximum count value of a counter N310, it may be considered that the invalid link failure occurs;
T312 of the primary secondary cell, where if measurement report is triggered when T312 runs, and an invalid link failure occurs in the primary secondary cell, information on the invalid link failure is reported to the network device; for example, if the number of consecutive desynchronizations of the primary secondary cell exceeds the maximum count value of a counter N311, it may be considered that the invalid link failure occurs; or
T304 of the primary secondary cell, where T304 is used by the UE to notify the network device to preform reconfiguration of synchronization failure.

T346a, T346b, T346c, T346d, T346e, T346j, and T346k are all timers related to the discontinuous reception (DRX) priority configuration of the secondary cell or the secondary cell group. The DRX priority configuration may be used for the UE to perform the DRX mechanism, thereby periodically sleeping to save power consumption. The functions of T346a, T346b, T346c, T346d, T346e, T346j, and T346k are roughly the same, but the events that trigger the start of these timers may be different, or the events that trigger the stop of these timers are also different. The details of T346a, T346b, T346c, T346d, T346e, T346j, and T346k may be found in the relevant embodiments, and will not be repeated here.

In some embodiments, releasing all or part of the configuration information of the current cell or the current cell group includes: releasing measurement configuration information of the current cell or the current cell group.

The measurement configuration information may be used by the UE to perform various measurements related to the current cell or the current cell group, such as beam measurement and/or reference signal measurement, etc.

For example, the measurement configuration information includes at least one of:
configuration information of a measurement object;
configuration information of a measurement reporting; or
configuration information of a measurement identifier.

For example, the configuration information of the measurement object may include: configuration information of a measurement interval, configuration information of a measurement frequency point, and/or configuration information of a reference signal to be measured, etc. The configuration information of the measurement interval may indicate a measurement time period for performing the cell measurement, etc. The configuration information of the measurement frequency point may indicate a frequency point measured during the cell measurement. The configuration information of the reference signal to be measured may indicate the reference signal to be measured, etc. The reference signal to be measured may include but is not limited to SSB and/or CSI-RS, etc.

The configuration information of the measurement reporting may include one or more of the following information:
configuration information of a reporting mode, indicating periodic reporting or event-triggered reporting;
configuration information of a reporting event;
a measurement value to be reported;
whether to report a neighboring cell measurement result;
neighboring cell measurement reporting related configuration;
beam measurement reporting related configuration; or
information of a measurement value included in the measurement report, for example, the measurement value may include: Reference Signal Received Power (RSRP), Reference Signal Received Quality (RSRQ) and/or Signal to Interference plus Noise Ratio (SINR), etc.

The configuration information of the reporting event may include one or more reporting thresholds, for example, when the RSRP or RSRQ or SINR of the current cell or the current serving cell drops to a first reporting threshold, it is determined to send a measurement report, and/or when the RSRP or RSRQ or SINR of a neighboring cell or neighboring cell group of the current cell or the current serving cell rises to a second reporting threshold, it is determined to send a measurement report, etc.

The configuration information of the measurement identifier may be used to associate the configuration information of the measurement object with the configuration information of the reporting configuration, for example, including the measurement identifier, and associated measurement object identifier and reporting configuration identifier.

Of course, the above are examples for the measurement configuration information, and the specific implementation is not limited to these examples.

In some embodiments, releasing all or part of the configuration information of the current cell or the current cell group includes at least one of:
in response to the current cell or the current cell group being a primary cell or a master cell group, clearing a UE variable for storing a measurement configuration corresponding to the primary cell or the master cell group, such as VarMeasConfig;
in response to the current cell or the current cell group being a primary cell or a master cell group, clearing a UE variable for storing a measurement report list corresponding to the primary cell or the master cell group, such as VarMeasReportList;
in response to the current cell or current cell group being a primary secondary cell or a secondary cell group, clearing a UE variable for storing a measurement configuration corresponding to the primary secondary cell or the secondary cell group, such as VarMeasConfig; or
in response to the current cell or current cell group being a primary secondary cell or a secondary cell group, clearing a UE variable for storing a measurement report list corresponding to the primary secondary cell or the secondary cell group, such as VarMeasReportList.

The variables VarMeasConfig and VarMeasReportList for storing the measurement configuration in this embodiment are specific examples of the aforementioned list for storing the configuration information.

VarMeasConfig in the UE stores a variable related to measurement. The UE may update the value of the variable in the VarMeasConfig according to the measurement parameter such as the configuration information of the measurement object in the measurement configuration information.

VarMeasReportList in the UE stores a variable related to measurement reporting. The UE may update the value of the variable in the VarMeasReportList according to the measurement parameter such as the triggered measurement reporting and/or measurement configuration information.

Two optional ways of applying the first configuration information and/or the second configuration information of the target cell or the target cell group are provided below.

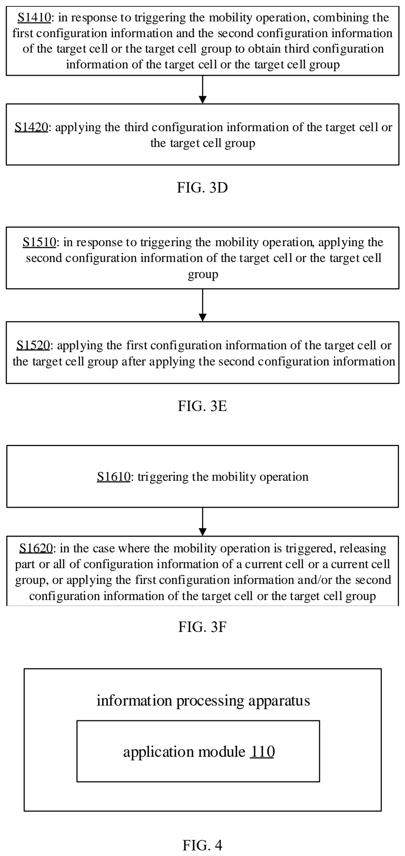

For example, as shown in FIG. 3D, embodiments of the present invention provide an information processing method, performed by a UE and includes:
S1410, in response to triggering a mobility operation, combining the first configuration information and the second configuration information of the target cell or the target cell group to obtain third configuration information of the target cell or the target cell group; and
S 1420, applying the third configuration information of the target cell or the target cell group.

The embodiment shown in FIG. 3D here may be implemented alone, or may be implemented in combination with any embodiment corresponding to the aforementioned FIG. 3A to FIG. 3C.

Optionally, at first, the first configuration information and the second configuration information of the target cell or the target cell group are combined, so that the parameter value of parameter x in the first configuration information will overwrite the parameter value of parameter x in the second configuration information, that is, when the first configuration information and the second configuration information both have the parameter x, the parameter value of the parameter x of the target cell or target cell group shall be based on the first configuration information; that is, the parameter value of parameter x in the third configuration information is equal to the parameter value of parameter x in the first configuration information. If the first configuration information does not contain the parameter value of parameter y, the parameter value of parameter y in the third configuration information is equal to the parameter value of parameter y in the second configuration information. If the second configuration information does not contain the parameter value of parameter z, the parameter value of parameter z in the third configuration information is equal to the parameter value of parameter z in the first configuration information.

In summary, the combination of the first configuration information and the second configuration information includes that:
the second configuration information supplements the parameter value of the parameter missing from the first configuration information; and/or
the parameter value in the first configuration information replaces the parameter value of the corresponding parameter in the second configuration information, and/or
the first configuration information supplements the parameter value of the parameter missing from the second configuration information.

Of course, the above is merely an example of combining the first configuration information and the second configuration information, and the specific implementation is not limited to the above example.

In embodiments of the present invention, when applying the configuration information of the target cell or the target cell group, the first configuration information and the second configuration information are first combined and then applied.

As shown in FIG. 3E, embodiments of the present invention provide an information processing method, performed by a user equipment UE, and the method includes:
S1510, in response to triggering a mobility operation, applying second configuration information of a target cell or a target cell group; and
S1520, after applying the second configuration information, applying the first configuration information of the target cell or the target cell group.

The embodiment shown in FIG. 3E here may be implemented alone or in combination with any embodiment corresponding to the aforementioned FIG. 3A to FIG. 3C. In embodiments of the present invention, when applying the configuration information of the target cell or the target cell group, the second configuration information is applied first, and then the first configuration information is applied. In this way, for the parameter value of the parameter z contained in both the first configuration information and the second configuration information, because the second configuration information is applied first and the first configuration information is applied later, so during the application of the first configuration information, the parameter value of the parameter z in the second configuration information will be overwritten by the parameter value of the parameter z in the first configuration information. For the parameter value that is missing from the first configuration information but is present in the second configuration information, the parameter value of the parameter in the second configuration information continues to be used.

In the process of applying the configuration information of the target cell or the target cell group in this embodiment, the combined application of the first configuration information and the second configuration information may be achieved through the application sequence of the first configuration information and the second configuration information, which is simple to implement.

As shown in FIG. 3F, embodiments of the present invention provide an information processing method, performed by a user equipment UE, and the method includes:
S1610, triggering a mobility operation; and
S1620, in the case where the mobility operation is triggered, releasing part or all of the configuration information of a current cell or a current cell group, or applying first configuration information and/or second configuration information of a target cell or a target cell group.

The embodiment shown in FIG. 3F here may be implemented alone, or may be implemented in combination with any embodiment corresponding to the aforementioned FIG. 3A to FIG. 3E.

For example, triggering the mobility operation may include but is not limited to at least one of:
in response to a trigger condition of a mobility configuration being met, triggering the mobility operation; or
in response to receiving a network indication, triggering the mobility operation.

For example, the mobility configuration information includes at least one of:
a configuration information identifier;
condition information, indicating the trigger condition;
configuration information of a candidate cell or a candidate cell group, for example, the candidate cell includes the aforementioned current cell, and the candidate cell group may include the aforementioned current cell group; or
indication information, indicating that the mobility configuration information is used for selective activation of the target cell or the target cell group.

Different mobility configuration information may have different configuration information identifiers. For example, among mobility configuration information of L1, mobility configuration information of L2, and mobility configuration information of L3, any two may have different configuration information identifiers.

The condition information indicates the trigger condition. When the trigger condition is met, it is considered that the mobility operation of the UE needs to be triggered. The trigger condition may include a conditional cell handover (CHO) trigger condition, for example, the UE will automatically perform an operation of serving cell handover, and the target cell for the handover may be a CHO target cell indicated in CHO configuration information.

For example, the configuration information of the candidate cell or the candidate cell group may be represented by RRC reconfiguration. For example, the configuration information of the candidate cell or the candidate cell group may include RRC reconfiguration information of the candidate cell or the candidate cell group, or configuration information of signaling of other layer.

For example, when the candidate cell or the candidate cell group becomes the target cell or the target cell group, the configuration information of the candidate cell or the candidate cell group may be the first configuration information and/or the second configuration information. For example, when the cell to be accessed by the UE is this candidate cell or candidate cell group, the configuration information of the candidate cell or the candidate cell group may be the first configuration information and/or the second configuration information.

For another example, the mobility configuration information may include: conditional PSCell addition/change (CPA/CPC) configuration information, and the corresponding condition information may indicate the triggering condition for PSCell addition/change. In this way, the UE may know whether the current UE status and/or network status meets the triggering condition for the PSCell addition/change according to the condition information. If the triggering condition is met, the corresponding mobility operation of PSCell addition or change is performed, without receiving the indication sent by the network device.

In some embodiments, whether the mobility configuration information is used for the mobility operation of the UE may be indicated by indication information in the mobility configuration information.

For example, the indication information may include one or more bits, and the bit value of the one or more bits indicates whether the corresponding mobility configuration information is the configuration information for triggering the mobility operation of the UE in embodiments of the present invention.

In some embodiments, the mobility configuration information may include cell selective activation configuration information. In this case, the cell selective activation configuration includes: configuration information of the candidate cell or the candidate cell group, and the UE may select the target cell or the target cell group to activate from the candidate cell or the candidate cell group according to the network status and/or the mobility of the UE itself. The operation of selective activation is one of the mobility operations of the UE for updating the serving cell or the serving cell group.

The cell selective activation configuration information may include: a configuration identification (ID), activation condition information, and RRC reconfiguration information or configuration information of other signaling of a cell or cell group. The activation condition information is one of the condition information indicating the trigger condition.

The UE may be configured with one or more cell group selective activation configurations at the same time, which may correspond to one or more candidate cells, and/or one or more candidate cell groups, including RRC reconfiguration information or configuration information of other signaling of the respective candidate cells or candidate cell groups.

In some embodiments, the network indication includes at least one of:
an indication for serving cell change;
an indication for serving cell group change;
an indication for candidate cell activation; or
an indication for candidate cell group activation.

The indication for serving cell change and/or the indication for serving cell group change may include but is not limited to: a regular handover indication received by the UE from the network device.

The indication for candidate cell activation and/or the indication for candidate cell group activation may include, but is not limited to: an activation indication.

The network indication here may include: L1 indication, L2 indication and/or L3 indication.

For example, the mobility operation includes at least one of: releasing a multi-radio dual connectivity MR-DC of the UE; or activating the target cell or the target cell group.

The UE may release the current dual connectivity and reestablish a new dual connectivity, thereby switching the serving cell or serving cell group from the current cell or current cell group to the target cell or target cell group.

The UE may activate a currently inactivated candidate cell or candidate cell group through an activation indication for a candidate cell or a candidate cell group. In this way, if accessing the target cell or target cell group is triggered, the current cell or the current cell group is automatically released.

The mobility operation described in the present invention include but is not limited to one or more of:
cell group selective activation;
cell selective activation;
cell group activation;
cell activation; or
condition triggered mobility.

In some embodiments, the mobility operation may be the cell group selective activation.

For example, configuration information of the cell group selective activation may include at least one of:
configuration information of a configuration ID;
configuration information of an activation condition, where the configuration information of the activation condition may be optional information in the configuration information of the cell group selective activation; or
configuration information of a candidate cell group/candidate cell, where the configuration information of the candidate cell group/candidate cell may include RRC reconfiguration information or configuration information of other signaling of the candidate cell group/candidate cell.

The selective activation of cell groups may change the serving cell group of the UE, and may be performed according to the configuration information of the cell group selective activation, without the network device to reconfigure or reinitialize the corresponding configuration of the cell group selective activation. Therefore, in the selective activation of cell groups, the network device may provide the terminal with a "cell group to be activated", also called a "candidate cell group". The "cell group to be activated" may be activated or deactivated later without re-providing the configuration of the cell group.

In the selective activation of cell groups, the network device may provide the terminal with a preconfigured candidate target cell group or target cell. The terminal may subsequently activate or deactivate the preconfigured candidate cell group or candidate cell according to the configuration (e.g., activation message) sent by the network device or the corresponding activation event, without re-providing the configuration information of the cell group. Alternatively, it may also be understood that in the cell group selective activation, after activating a new cell or cell group, or applying a new cell configuration or a new cell group configuration, or accessing a new cell or cell group, the terminal will not delete the corresponding configuration information of the cell group selective activation.

The selective activation of cell groups may also be referred to as cell group activation. The cell group activation enables the corresponding configuration information still executable after the cell group or cell is changed, without the network to reconfigure or reinitialize the corresponding configuration information of the cell group activation. Therefore, the cell group activation may reduce signaling overhead and the interruption duration of cell group change. The configuration information of the cell group activation may include: configuration ID and the configuration of the target cell or the target cell group. Optionally, the configuration information of the cell group activation may also include a trigger condition, which may also be referred to as an execution condition and/or an activation condition.

**In** some embodiments, the cell group activation is a mobility operation, including any kind of mobility management process where through configuring the cell group activation configuration, the terminal activates or deactivates a corresponding cell or cell group autonomously or according to a signaling sent by the network or a criteria specified in the protocol, or the terminal accesses a cell or cell group after applying a corresponding cell configuration or cell group configuration.

**In** some embodiments, the cell group activation is a mobility operation, including any mobility-related operation that does not delete or release corresponding part or all of the configuration information after the mobility process. Not deleting or releasing the corresponding part or all of the configuration information may also be called retaining the corresponding part or all of the configuration information.

In some embodiments, the cell group selective activation may also be referred to as cell group activation, and the cell selective activation may also be referred to as cell activation, for example, Layer 1 and/or Layer 2 triggered cell group/cell activation (L1/L2-triggered mobility, LTM).

In some embodiments, the mobility operation may also be condition triggered mobility, such as one or more of conditional handover, conditional PSCell addition, or conditional PSCell change.

In the technologies of the conditional handover (CHO), and the conditional PSCell change (CPC)/conditional PSCell addition (CPA), the UE configured with CHO/CPC/CPA needs to release the CHO/CPC/CPA configuration when completing random access to the target PCell/PSCell. Therefore, if the network device does not reconfigure and reinitialize CHO/CPC/CPA for the UE, the UE will not have the opportunity to continue to perform CHO/CPC/CPA later. This will increase the latency of handover or SCG change and increase signal overhead, especially in the case of frequent change of cell group (CG) in the frequency range (FR) scenario.

Therefore, the selective activation of cell groups in MR-DC enables the configuration still executable subsequent after the CG is changed, without the network to reconfigure or reinitialize the corresponding configuration information of the cell group selective activation. This may reduce signaling overhead and the interruption duration of CG change.

The cell group selective activation configuration may include at least one of:
a configuration ID,
condition information of an activation condition, which may be optional information; or
configuration information of a cell group/cell to be activated, which may also be referred to as configuration information of a candidate cell or candidate cell group, and the configuration information may at least include RRC reconfiguration information or configuration information of other signaling.

In the selective activation of cell groups, the network device may provide a "cell group to be activated" to the UE. The "cell group to be activated" may be activated or deactivated later without re-providing the configuration of the cell group.

In the related art, in the cell group selective activation, after activating configuration information of a new cell group, the UE will not delete the configuration information of the corresponding cell group selective activation for subsequent use.

The above configuration information may be divided into two types: full configuration information and addition configuration (delta configuration) information.

The network device provides the UE with RRC configuration information for configuring the radio communication of the UE. The RRC configuration information may be configured in the following two ways:

Full configuration information: when receiving a new RRC configuration message using the full configuration manner, the current wireless configuration information (such as dedicated wireless configuration and general wireless configuration) will be cleared, and configuration information in the RRC configuration message using the full configuration manner is applied.

Addition configuration (delta configuration) information: when receiving a new RRC configuration message using the addition configuration manner, configuration information in the RRC configuration message using the addition configuration manner is applied on the basis of the current wireless configuration information. The "current wireless configuration information" is considered as the "reference configuration information" of the "addition configuration information". For example, the value of "field-1" in the current wireless configuration information is "1" and the value of "field-2" is "1", and the value of "field-1" in the addition configuration information is "2". After receiving the addition configuration, the value of "field-1" is set to "2", and the value of "field-2" is retained as **"1".**

Based on the support of addition configuration in the cell group selective activation, the configuration information of the candidate cell is the addition configuration information on the basis of the reference configuration. There are two ways to implement the reference configuration information. One is based on the reference configuration information of a specific cell, and configurations of all candidate cells are addition configuration information on the basis of this reference configuration. The other one is to use the configuration information of the serving cell when the UE receives the configuration of the candidate cell as the reference configuration information.

The above two kinds of reference configuration information are not the configuration information of the serving cell when the UE triggers the cell group selective activation. If the configuration of the candidate cell is directly applied according to the existing process, an incorrect configuration will be obtained.

Moreover, since the configuration of the candidate cell is the addition configuration information to the reference configuration, if the addition configuration information and the reference configuration information are directly applied on the basis of the existing configuration information, incorrect configuration information may also be obtained, because for RRC parameters configured in the manner of Add/Mod or release list, if the new complete configuration information (addition configuration and reference configuration) is directly applied on the basis of the existing configuration information, some contents that exist in the existing configuration but are not included in the new configuration information may also be retained.

In view of this, embodiments of the present invention propose a method of applying addition configuration suitable for cell group selective activation. For the cell group selective activation, when performing cell activation and applying candidate configuration information, the UE needs to release part or all of the existing configuration information, for example, applied reference configuration information and addition configuration information stored by the UE.

In optional embodiment 1, in response to the UE initiating the execution process of cell group selective activation, before applying the candidate configuration information, the UE releases part or all of the configuration information of the corresponding cell group.

For example, in response to the UE initiating the execution process of cell group selective activation, before applying the candidate configuration information, the UE releases the measurement configuration information of the corresponding cell group.

In optional embodiment 2, in response to the UE initiating the execution process of cell group selective activation, the UE applies candidate configuration information and/or reference configuration information.

For example, if the candidate configuration information stored by the UE is a combination of the received addition configuration information and the reference configuration information, the UE applies the candidate configuration information.

For example, if the candidate configuration information stored by the UE is the received addition configuration information, the UE applies the reference configuration information and the candidate configuration information.

The cell group may be a master cell group (MCG) or a secondary cell group (SCG), and the cell may be one of a primary cell (PCell), a primary secondary cell (PSCell) or a secondary cell (SCell).

In optional embodiment 3, the UE receives one or more mobility configuration information sent by the network device, the mobility configuration information is used for the first mobility operation, the first mobility operation includes but is not limited to: cell group selective activation and cell group/cell activation, and the mobility configuration information includes one or more of the following information:
a configuration identifier (for example, condReconfigId);
a trigger condition (for example, condExecutionCond and/or condExecutionCondSCG), where the trigger condition may be represented by one or more measurement identifiers;
configuration information of the candidate cell group/cell (condRRCReconfig), where the configuration information of the candidate cell group/cell may be represented by RRCReconfiguration;
indication information, indicating that this configuration is used for the first mobility operation, such as cell group selective activation.

For example, when a corresponding mobility operation is triggered, the configuration information of the corresponding candidate cell group/cell is the configuration information of the target cell group/cell, which may be the first configuration information and/or the second configuration information of the target cell group/cell. For example, it is the first configuration information of the target cell group/cell.

For example, in response to receiving the above configuration information, the UE stores the configuration information in the UE-side var variable. The UE may directly store the configuration information of the candidate cell group/cell (configured by the addition configuration manner); the UE may also combine the configuration information of the candidate cell group/cell with the reference configuration and store the combined configuration information. The reference configuration may be the reference configuration information configured by the network, or it may be the configuration of the corresponding current serving cell (for example, the configuration of the serving cell when receiving this mobility configuration). The UE may store the reference configuration information separately.

For example, the UE determines whether to initiate the execution procedure of the first mobility operation based on a trigger condition or a network configuration.

In optional embodiment 4, in response to the UE meeting the triggering condition of the candidate cell group/cell, the UE initiates the execution process of the first mobility operation and applies the configuration information of the corresponding candidate cell group/cell.

For example, in response to the UE receiving an indication for cell group change (or activation) sent by the network device (for example, indicating a candidate cell group to be activated (to be accessed)), the UE initiates the execution process of the first mobility operation and applies the configuration information of the corresponding candidate cell group/cell.

For example, the UE initiating the execution process of the first mobility operation may be based on that the UE meets the trigger condition of the candidate cell group/cell, and/or the UE receives an indication for cell group change (or activation) sent by the network.

In optional embodiment 5, in response to the UE initiating the execution process of the first mobility operation, before applying the candidate configuration information, the UE releases part or all of the configuration information of the corresponding cell group.

For example, in response to the UE initiating the execution process of the first mobility operation, the UE releases all of the current configuration information.

For example, in response to the UE initiating the execution process of the first mobility operation, the UE releases part of the current configuration information.

For example, in response to the UE performing the mobility operation, if the corresponding configuration information includes indication information (or the configuration information corresponds to indication information), indicating that the configuration information is used for the first mobility operation, then before applying the candidate configuration information, the UE releases part or all of the configuration information of the corresponding cell group.

In optional embodiment 5, in response to the UE initiating the execution process of the first mobility operation, before applying the candidate configuration information, the UE releases the corresponding measurement configuration information.

The releasing the corresponding configuration information refers to:
if this mobility operation is for MCG change (or PCell change, such as MCG selective activation), releasing the corresponding measurement configuration information of the MCG, for example, clearing the VarMeasConfig corresponding to the MCG, and/or clearing the VarMeasReportList corresponding to the MCG;
if this mobility operation is for SCG change (or PSCell change, such as SCG selective activation), releasing the corresponding measurement configuration information of the SCG, for example, clearing all entries in the VarMeasConfig corresponding to the SCG, and/or clearing all entries in the VarMeasReportList corresponding to the SCG.

For example, the measurement configuration information that is released by the UE includes one or more of: configuration information of a measurement object, configuration information of a measurement reporting, or configuration information of a measurement identifier.

In optional embodiment 6, in response to the UE initiating the execution process of the first mobility operation, before applying the candidate configuration information, the UE performs MR-DC release. The first mobility operation may include: SCG selective activation for SCG change.

For example, in response to the UE initiating the execution process of the first mobility operation, where the first mobility operation may include SCG selective activation for SCG change, before applying the candidate configuration information, the UE performs one or more of the following steps:
for example: releasing signaling radio bearer 3 (SRB3), if established; releasing SCG-related measurement configuration information; releasing SCG configuration information; releasing other configurations (otherConfig) related to SCG; stopping SCG-related timers (for example: one or more of T346a, T346b, T346c, T346d, T346e, T346j or T346k).

For example, in response to the UE initiating the execution process of the first mobility operation (SCG selective activation for SCG change), before applying the candidate configuration information, the UE performs one or more of the following steps:
resetting an SCG MAC entity;
executing release of RLC bearer related to SCG configuration;
execute release of BH RLC channel related to SCG configuration;
stopping the timer T310 corresponding to the PSCell;
stopping the timer T312 corresponding to the PSCell; or
stopping the timer T304 corresponding to the PSCell.

In summary, in response to the UE initiating the execution procedure of the first mobility operation, if the candidate configuration information stored by the UE is a combination of the received addition configuration information and the reference configuration information, the UE applies the candidate configuration.

For example, the UE applies candidate configuration information corresponding to the candidate cell group/cell to be activated (to be accessed/selected/triggered).

For example, in response to the UE initiating the execution process of the first mobility operation, if the candidate configuration information stored by the UE is the received addition configuration information, the UE applies the reference configuration and the candidate configuration, including that:
the UE combines the stored reference configuration and the stored candidate configuration information corresponding to the candidate cell group/cell to be activated (to be accessed/selected/triggered), and then applies the combined configuration information; or
the UE applies the reference configuration information, and then applies the stored candidate configuration information corresponding to the candidate cell group/cell to be activated (to be accessed/selected/triggered).

As shown in FIG 4, embodiments of the present invention provide an information processing apparatus, and the apparatus includes:
an application module 110, configured to apply first configuration information and/or second configuration information of a target cell or a target cell group in response to triggering a mobility operation.

The apparatus may include the aforementioned UE.

The application module 110 may include a processor, which may include a central processing unit and/or an application processor.

For example, the apparatus may further include: a storage module; the storage module may be connected to the application module 110, and the storage module may be used to store at least the first configuration information and/or the second configuration information.

In some embodiments, the application module 110 is configured to release all or part of configuration information of a current cell or a current cell group and apply the first configuration information and/or the second configuration information of the target cell or the target cell group in response to triggering the mobility operation.

In some embodiments, the application module 110 is configured to: release all or part of configuration of a current primary cell or master cell group in response to triggering the mobility operation of a primary cell or a master cell group, or release all or part of configuration of a current primary secondary cell or secondary cell group in response to triggering the mobility operation of a primary secondary cell or a secondary cell group.

In some embodiments, the first configuration information of the target cell or the target cell group at least includes:
RRC reconfiguration information of the target cell or the target cell group.

In some embodiments, the application module 110 is configured to at least release such radio resource control (RRC) configuration information in the configuration information of the current cell or the current cell group that is stored by the UE and has an update manner of addition, modification and/or release.

In some embodiments, the application module 110 is configured to perform at least one of:
releasing radio resource control (RRC) reconfiguration information of the current cell or the current cell group;
in response to the current cell or the current cell group being a secondary cell or a secondary cell group configured with a signaling radio bearer, SRB3, releasing configuration information of the SRB3 of the current cell or the current cell group;
in response to the current cell or the current cell group being a primary secondary cell or a secondary cell group, releasing timer configuration information related to the current cell or the current cell group; or
in response to the current cell or the current cell group being a primary secondary cell or a secondary cell group, resetting a media access control (MAC) entity of the current cell or the current cell group.

In some embodiments, the application module 110 is configured to release measurement configuration information of the current cell or the current cell group.

In some embodiments, the measurement configuration information includes at least one of:
configuration information of a measurement object;
configuration information of reporting configuration; or
configuration information of a measurement identifier.

In some embodiments, the application module 110 is configured to perform at least one of:
in response to the current cell or the current cell group being a primary cell or a master cell group, clearing a UE variable for storing a measurement report list corresponding to the primary cell or the master cell group;
in response to the current cell or the current cell group being a primary secondary cell or a secondary cell group, clearing a UE variable for storing a measurement configuration corresponding to the primary secondary cell or the secondary cell group; or
in response to the current cell or the current cell group being a primary secondary cell or a secondary cell group, clearing a UE variable for storing a measurement report list corresponding to the primary secondary cell or the secondary cell group.

In some embodiments, the application module 110 is configured to: combine the first configuration information and the second configuration information of the target cell or the target cell group to obtain third configuration information of the target cell or the target cell group; and apply the third configuration information of the target cell or the target cell group.

In some embodiments, the application module 110 is configured to: apply the second configuration information of the target cell or the target cell group; and apply the first configuration information of the target cell or the target cell group after applying the second configuration information.

In some embodiments, the apparatus further includes: a trigger module, configured to: trigger the mobility operation in response to a trigger condition of a mobility configuration being met; or trigger the mobility operation in response to receiving a network indication.

In some embodiments, the mobility operation includes at least one of:
releasing a multi-radio dual connectivity (MR-DC) of the UE; or
activating the target cell or the target cell group.

Embodiments of the present invention provide a communication device, which includes: a memory for storing instructions executable by a processor; and the processor connected to the memory. The processor is configured to perform the information processing method according to any of the aforementioned technical solutions.

The processor may include various types of storage media, which are non-transitory computer storage media that may continue to memorize information stored thereon when the communication device is powered off.

The communication device here includes: a UE or a network device.

The processor may be connected to the memory through a bus or the like, to read executable programs stored in the memory, for example, at least one of the methods shown in FIG. 3A to FIG. 3F.

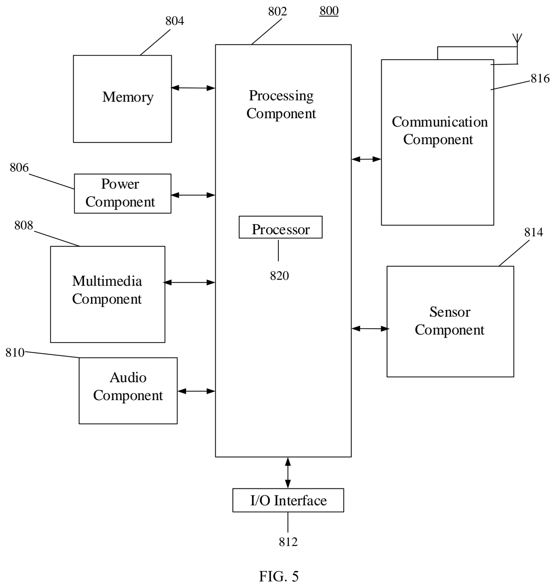

FIG. 5 is a block diagram of a UE 800 according to an illustrative embodiment. For example, the UE 800 may be a mobile phone, a computer, a digital broadcast UE, a messaging device, a game console, a tablet device, a medical device, a fitness device, a personal digital assistant, or the like.

Referring to FIG. 5, the UE 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the UE 800, such as the operations associated with display, phone calls, data communications, camera operations, and recording operations. The processing component 802 may include one or more processors 820 to execute instructions to generate all or some of the steps in the above-described methods. Moreover, the processing component 802 may include one or more modules which facilitate the interaction between the processing component 802 and other components. For instance, the processing component 802 may include a multimedia module to facilitate the interaction between the multimedia component 808 and the processing component 802.

The memory 804 is configured to store various types of data to support the operation of the UE 800. Examples of such data include instructions for any applications or methods operated on the UE 800, contact data, phonebook data, messages, pictures, videos, etc. The memory 804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the UE 800. The power component 806 may include a power management system, one or more power sources, and any other components associated with the generation, management, and distribution of power in the UE 800.

The multimedia component 808 includes a screen providing an output interface between the UE 800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. The front camera and/or the rear camera may receive an external multimedia datum while the UE 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone (MIC) configured to receive an external audio signal when the UE 800 is in an operation mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as keyboards, click wheels, buttons, and the like. The buttons may include, but are not limited to, a home button, a volume button, a starting button, and a locking button.

The sensor component 814 includes one or more sensors to provide status assessments of various aspects of the UE 800. For instance, the sensor component 814 may detect an open/closed status of the UE 800, relative positioning of components, e.g., the display and the keypad, of the UE 800, a change in position of the UE 800 or a component of the UE 800, a presence or absence of user contact with the UE 800, an orientation or an acceleration/deceleration of the UE 800, and a change in temperature of the UE 800. The sensor component 814 may include a proximity sensor configured to detect the presence of nearby objects without any physical contact. The sensor component 814 may further include a light sensor, such as a CMOS or CCD image sensor, for use in imaging applications. In some embodiments, the sensor component 814 may further include an accelerometer sensor, a gyroscope sensor, a magnetic sensor, a pressure sensor, or a temperature sensor.

The communication component 816 is configured to facilitate communication, wired or wireless, between the UE 800 and other devices. The UE 800 may access a wireless network based on a communication standard, such as Wi-Fi, 2G, or 3G, or a combination thereof. In an illustrative embodiment, the communication component 816 receives a broadcast signal or broadcast associated information from an external broadcast management system via a broadcast channel. In an illustrative embodiment, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In an illustrative embodiment, the UE 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic elements, for performing the above method.

In an illustrative embodiment, a non-transitory computer-readable storage medium including instructions is also provided, such as a memory 804 including instructions, and the instructions may be executed by the processor 820 of the UE 800 to generate the above method. For example, the non-transitory computer-readable storage medium may be a ROM, a random access memory (RAM), a CD-ROM, a magnetic tape, a floppy disk, an optical data storage device, etc.

Other embodiments of the embodiments of the present invention will be apparent to those skilled in the art from consideration of the specification and practice of the present invention disclosed here. The present invention is intended to cover any variations, uses, or adaptations of the embodiments of the present invention following the general principles thereof and including such departures from the embodiments of the present invention as come within known or customary practice in the art. It is intended that the specification and examples be considered as illustrative only, with a true scope and spirit of the embodiments of the present invention being indicated by the following claims.

It will be appreciated that the embodiments of the present invention is not limited to the exact construction that has been described above and illustrated in the accompanying drawings, and that various modifications and changes may be made without departing from the scope thereof. It is intended that the scope of the embodiments of the present invention only be limited by the appended claims.

## Claims

1. An information processing method, performed by a user equipment (UE), comprising:
in response to triggering a mobility operation, applying first configuration information and/or second configuration information of a target cell or a target cell group.

2. The method according to claim 1, wherein in response to triggering the mobility operation, applying the first configuration information and/or the second configuration information of the target cell or the target cell group comprises:
in response to triggering the mobility operation, releasing all or part of configuration information of a current cell or a current cell group and applying the first configuration information and/or the second configuration information of the target cell or the target cell group.

3. The method according to claim 2, wherein in response to triggering the mobility operation, releasing all or part of the configuration of the current cell or the current cell group comprises:
in response to triggering the mobility operation of a primary cell or a master cell group, releasing all or part of the configuration of a current primary cell or master cell group; and/or
in response to triggering the mobility operation of a primary secondary cell or a secondary cell group, releasing all or part of the configuration of a current primary secondary cell or secondary cell group.

4. The method according to claim 2, wherein releasing all or part of the configuration information of the current cell or the current cell group comprises:
at least releasing such radio resource control (RRC) configuration information in the configuration information of the current cell or the current cell group that is stored by the UE and has an update manner of addition, modification and/or release.

5. The method according to claim 2, wherein releasing all or part of the configuration information of the current cell or the current cell group comprises at least one of:
releasing radio resource control (RRC) reconfiguration information of the current cell or the current cell group;
in response to the current cell or the current cell group being a secondary cell or a secondary cell group configured with a signaling radio bearer SRB3, releasing configuration information of the SRB3 of the current cell or the current cell group;
in response to the current cell or the current cell group being a primary secondary cell or a secondary cell group, releasing timer configuration information related to the current cell or the current cell group;
in response to the current cell or the current cell group being a primary secondary cell or a secondary cell group, resetting a media access control (MAC) entity of the current cell or the current cell group.

6. The method according to claim 2, wherein releasing all or part of the configuration information of the current cell or the current cell group comprises: releasing measurement configuration information of the current cell or the current cell group.

7. The method according to claim 6, wherein the measurement configuration information comprises at least one of:
configuration information of a measurement object;
configuration information of reporting configuration; or
configuration information of a measurement identifier.

8. The method according to claim 2, 4 or 5, wherein releasing all or part of the configuration information of the current cell or the current cell group comprises at least one of:
in response to the current cell or the current cell group being a primary cell or a master cell group, clearing a UE variable for storing a measurement configuration corresponding to the primary cell or the master cell group;
in response to the current cell or the current cell group being a primary cell or a master cell group, clearing a UE variable for storing a measurement report list corresponding to the primary cell or the master cell group;
in response to the current cell or the current cell group being a primary secondary cell or a secondary cell group, clearing a UE variable for storing a measurement configuration corresponding to the primary secondary cell or the secondary cell group; or
in response to the current cell or the current cell group being a primary secondary cell or a secondary cell group, clearing a UE variable for storing a measurement report list corresponding to the primary secondary cell or the secondary cell group.

9. The method according to any one of claims 1 to 8, wherein applying the first configuration information and/or the second configuration information of the target cell or the target cell group comprises:
combining the first configuration information and the second configuration information of the target cell or the target cell group to obtain third configuration information of the target cell or the target cell group; and
applying the third configuration information of the target cell or the target cell group.

10. The method according to claim 9, wherein applying the first configuration information and/or the second configuration information of the target cell or the target cell group comprises:
applying the second configuration information of the target cell or the target cell group; and
applying the first configuration information of the target cell or the target cell group after applying the second configuration information.

11. The method according to any one of claims 1 to 10, wherein the first configuration information of the target cell or the target cell group at least comprises:
RRC reconfiguration information of the target cell or the target cell group.

12. The method according to any one of claims 1 to 11, further comprising:
in response to a trigger condition of a mobility configuration being met, triggering the mobility operation; or
in response to receiving a network indication, triggering the mobility operation.

13. The method according to any one of claims 1 to 12, wherein the mobility operation comprises at least one of:
releasing a multi-radio dual connectivity (MR-DC) of the UE; or
activating the target cell or the target cell group.

14. An information processing apparatus, comprising:
an application module, configured to apply first configuration information and/or second configuration information of a target cell or a target cell group in response to triggering a mobility operation.

15. The apparatus according to claim 14, wherein the application module is configured to release all or part of configuration information of a current cell or a current cell group and apply the first configuration information and/or the second configuration information of the target cell or the target cell group in response to triggering the mobility operation.

16. The apparatus according to claim 15, wherein the application module is configured to:
release all or part of the configuration of a current primary cell or master cell group in response to triggering the mobility operation of a primary cell or a master cell group, or
release all or part of the configuration of a current primary secondary cell or secondary cell group in response to triggering the mobility operation of a primary secondary cell or a secondary cell group.

17. The apparatus according to claim 15, wherein the application module is configured to at least release such radio resource control (RRC) configuration information in the configuration information of the current cell or the current cell group that is stored by a UE and has an update manner of addition, modification and/or release.

18. The apparatus according to claim 15, wherein the application module is configured to perform at least one of:
releasing radio resource control (RRC) reconfiguration information of the current cell or the current cell group;
in response to the current cell or the current cell group being a secondary cell or a secondary cell group configured with a signaling radio bearer SRB3, releasing configuration information of the SRB3 of the current cell or the current cell group;
in response to the current cell or the current cell group being a primary secondary cell or a secondary cell group, releasing timer configuration information related to the current cell or the current cell group; or
in response to the current cell or the current cell group being a primary secondary cell or a secondary cell group, resetting a media access control (MAC) entity of the current cell or the current cell group.

19. The apparatus according to claim 15, wherein the application module is configured to release measurement configuration information of the current cell or the current cell group.

20. The apparatus according to claim 20, wherein the measurement configuration information comprises at least one of:
configuration information of a measurement object;
configuration information of reporting configuration; or
configuration information of a measurement identifier.

21. The apparatus according to claim 15, 17 or 18, wherein the application module is configured to perform at least one of:
in response to the current cell or the current cell group being a primary cell or a master cell group, clearing a UE variable for storing a measurement configuration corresponding to the primary cell or the master cell group;
in response to the current cell or the current cell group being a primary cell or a master cell group, clearing a UE variable for storing a measurement report list corresponding to the primary cell or the master cell group;
in response to the current cell or the current cell group being a primary secondary cell or a secondary cell group, clearing a UE variable for storing a measurement configuration corresponding to the primary secondary cell or the secondary cell group; or
in response to the current cell or the current cell group being a primary secondary cell or a secondary cell group, clearing a UE variable for storing a measurement report list corresponding to the primary secondary cell or the secondary cell group.

22. The apparatus according to any one of claims 14 to 21, wherein the application module is configured to: combine the first configuration information and the second configuration information of the target cell or the target cell group to obtain third configuration information of the target cell or the target cell group; and apply the third configuration information of the target cell or the target cell group.

23. The apparatus according to claim 22, wherein the application module is configured to: apply the second configuration information of the target cell or the target cell group; and apply the first configuration information of the target cell or the target cell group after applying the second configuration information.

24. The apparatus according to any one of claims 14 to 23, wherein the first configuration information of the target cell or the target cell group at least comprises:
RRC reconfiguration information of the target cell or the target cell group.

25. The apparatus according to any one of claims 14 to 24, further comprising:
a trigger module, configured to: trigger the mobility operation in response to a trigger condition of a mobility configuration being met; or trigger the mobility operation in response to receiving a network indication.

26. The apparatus according to any one of claims 14 to 25, wherein the mobility operation comprises at least one of:
releasing a multi-radio dual connectivity (MR-DC) of a UE; or
activating the target cell or the target cell group.

27. A communication device, comprising:
a processor,
a transceiver,
a memory, and
programs, stored in the memory and executable by the processor,
wherein the processor is configured to perform the method according to any one of claims 1 to 13 when executing the programs.

28. A computer storage medium, having stored therein executable programs that, when executed by a processor, cause the method according to any one of claims 1 to 13 to be performed.
